# EUROPEAN PATENT APPLICATION

(11) **EP 4 169 979 A1**
(43) Date of publication of application: **26.04.2023**
(21) Application number: 20942167.6
(22) Date of filing: 23.06.2020
(51) Int. Cl.: C08K 9/06, C08K 3/36, C08K 7/26, C08K 5/5415, C08L 79/08

(54) **POLYIMIDE AND PREPARATION METHOD THEREOF**

(71) Applicant: LG Electronics, Inc., Yeongdeungpo-gu Seoul 07336 (KR); INHA University Research and Business Foundation, Incheon 22212 (KR)
(72) Inventor: LEE, Junseok, Seoul 06772 (KR); YOU, Dongjoo, Seoul 06772 (KR); CHO, Seongmoon, Seoul 06772 (KR); LEE, Jinkyun, Incheon 22212 (KR); LEE, Sejin, Incheon 22212 (KR)
(74) Representative: Vossius & Partner Patentanwälte Rechtsanwälte mbB
(86) International application number: PCT/KR2020/008158
(87) International publication number: WO 2021/261607

(57) **Abstract**

The present disclosure relates to polyimide and a preparation method thereof. The polyimide according to an embodiment of the present disclosure comprises: silica having pores; and a fluorinated alkyl chain attached to the surface of the silica having pores, and is prepared by mixing a dispersion solution comprising the silica having pores and an organic solution comprising a polyimide precursor. Accordingly, hygroscopicity is reduced, and dispersibility can be enhanced.

## Description

### BACKGROUND

### 1. Field of the disclosure

The present disclosure relates to polyimide and a method of preparing the same, and more particularly to polyimide and a method of preparing the same in which hygroscopicity may be reduced and dispersibility may be improved.

### 2. Description of the Related Art

A data transmission and reception rate in a communication device for mobile communication and the like gradually increases.

However, while the data transmission and reception rate in the communication device rapidly increases, a problem occurs in that signal loss increases due to high linearity of a communication signal.

Accordingly, it is preferable to use a material with low signal loss in the communication device. Recently, a liquid crystal polymer (LCP) or a polyimide (PI) material with low signal loss is applied.

However, the LCP has a drawback in that the LCP has low processability in manufacturing a circuit board and poor adhesion with a copper foil.

Meanwhile, dielectric loss increases due to high hygroscopicity of the polyimide PI, such that the polyimide PI is difficult to be applied to a communication device using mmWave frequency band.

Korean Patent No. 10-2016-0090153 (hereinafter referred to as related art 1) discloses a method of preparing a polyimide film by using porous particles, and a polyimide film with low dielectric constant.

Particularly, related art 1 discloses a method of achieving a low dielectric constant by using electrical properties of air within hollow silica particles.

However, related art 1 has a drawback in that the hollow silica particles have high hygroscopicity, such that a low dielectric constant effect is offset in a high-humidity condition. In addition, if a particle size of the silica is greater than or equal to 1 um, physical properties are degraded during the manufacture of a polyimide film having a size of about 20 um, and defects may occur during the manufacture of a circuit board.

Meanwhile, Korean Patent No. 10-2014-0114953 (hereinafter referred to as related art 2) discloses polyimide.

Particularly, related art 2 discloses a method of manufacturing a polyimide film by mixing 10 wt% to 30 wt% of fluoropolymer particles with a polyamic acid, in which a low dielectric constant may be achieved by using the fluoropolymer material having a low dielectric constant, and by forming a pore structure in the polyimide film.

However, related art 2 has a drawback in that when mixed with an organic solvent, the fluoropolymer particles are not dispersed well in the organic solvent, and precipitation occurs, such that it is difficult to form a uniform polyimide film.

### SUMMARY

It is an object of the present disclosure to provide polyimide and a method of preparing the same, in which porous silica is surface-treated by fluoridation, thereby reducing hygroscopicity and improving dispersibility.

It is another object of the present disclosure to provide polyimide capable of reducing signal loss when used in a circuit board or cable, and a method of preparing the polyimide.

In order to achieve the above objects, polyimide according to an embodiment of the present disclosure includes: porous silica; and a fluorinated alkyl chain attached to a surface of the porous silica, wherein the polyimide is prepared by mixing a dispersion solution containing the porous silica with an organic solution containing a polyimide precursor.

Meanwhile, the polyimide may be prepared by: surface treating the porous silica by fluoridation; injecting a dispersant additive into the porous silica, which is surface-treated by fluoridation, and dispersing the porous silica in an organic solvent; and mixing the dispersion solution containing the porous silica with the organic solution containing the polyimide precursor.

Meanwhile, the surface treatment by fluoridation may include: dispersing the porous silica in a fluorine solvent or a nonpolar hydrocarbon solvent; and adding a silane containing fluorine, chlorine, or an alkoxy group.

Meanwhile, the silane may be added in an amount of 10 wt% or more with respect to the silica.

Meanwhile, the silica may have a diameter in a range of 0.1 um to 2.5 um.

Meanwhile, the silica may be added in a range of 5 % to 50 % with respect to a weight of the polyimide. Meanwhile, the polyimide may have a density of 2.5 g/cm³ or less.

In order to achieve the above objects, a method of preparing polyimide according to an embodiment of the present disclosure includes: surface treating porous silica by fluoridation; injecting a dispersant additive into the porous silica, which is surface-treated by fluoridation, and dispersing the porous silica in an organic solvent; and mixing a dispersion solution containing the porous silica with the organic solution containing a polyimide precursor.

Meanwhile, the surface treatment by fluoridation may include reforming a surface of silica particles by using a penetrant.

Meanwhile, the surface treatment by fluoridation may include: dispersing the porous silica in a fluorine solvent or a nonpolar hydrocarbon solvent; and adding a silane containing fluorine, chlorine, or an alkoxy group.

Meanwhile, the silane may include trichloro silane, trimethoxy silane, or alkoxy silane.

Meanwhile, the dispersant additive may have affinity with both of the silica, which is surface-treated by fluoridation, and the organic solvent.

Meanwhile, the silica may have a diameter in a range of 0.1 um to 2.5 um.

Meanwhile, the silica may be added in a range of 5 % to 50 % with respect to a weight of the polyimide.

Meanwhile, a density of the polyimide may be lower than a density of the silica.

Meanwhile, the polyimide may have a density of 2.5 g/cm³ or less.

Meanwhile, the dispersing may include synthesizing an amphiphilic block copolymer by using an amphiphilic dispersant additive and the organic solvent.

### EFFECTS OF THE DISCLOSURE

Polyimide according to an embodiment of the present disclosure includes: porous silica; and a fluorinated alkyl chain attached to a surface of the porous silica, wherein the polyimide is prepared by mixing a dispersion solution containing the porous silica with an organic solution containing a polyimide precursor. Accordingly, hygroscopicity may be reduced, and dispersibility may be improved. Particularly, hygroscopicity may be reduced even in a high-humidity condition, such that polyimide with low dielectric loss may be prepared. Thus, by using the polyimide in a circuit board or cable of a communication device, signal loss may be reduced.

Meanwhile, the polyimide may be prepared by: surface treating the porous silica by fluoridation; injecting a dispersant additive into the porous silica, which is surface-treated by fluoridation, and dispersing the porous silica in an organic solvent; and mixing the dispersion solution containing the porous silica with the organic solution containing the polyimide precursor. Accordingly, hygroscopicity may be reduced, and dispersibility may be improved, and as a result, polyimide with low dielectric loss may be prepared.

Meanwhile, the surface treatment by fluoridation may include: dispersing the porous silica in a fluorine solvent or a nonpolar hydrocarbon solvent; and adding a silane containing fluorine, chlorine, or an alkoxy group. Accordingly, hygroscopicity may be reduced.

Meanwhile, a method of preparing polyimide according to an embodiment of the present disclosure includes: surface treating porous silica by fluoridation; injecting a dispersant additive into the porous silica, which is surface-treated by fluoridation, and dispersing the porous silica in an organic solvent; and mixing a dispersion solution containing the porous silica with the organic solution containing a polyimide precursor. Accordingly, hygroscopicity may be reduced, and dispersibility may be improved. Particularly, hygroscopicity may be reduced even in a high-humidity condition, such that polyimide with low dielectric loss may be prepared. Thus, by using the polyimide in a circuit board or cable of a communication device, signal loss may be reduced.

Meanwhile, the surface treatment by fluoridation may include reforming a surface of silica particles by using a penetrant. Accordingly, hygroscopicity may be reduced.

Meanwhile, the surface treatment by fluoridation may include: dispersing the porous silica in a fluorine solvent or a nonpolar hydrocarbon solvent; and adding a silane containing fluorine, chlorine, or an alkoxy group. Accordingly, hygroscopicity may be reduced.

Meanwhile, the silane may include trichloro silane, trimethoxy silane, or alkoxy silane. Accordingly, hygroscopicity may be reduced.

Meanwhile, the silane may be added in an amount of 10 wt% or more with respect to the silica. Accordingly, hygroscopicity may be reduced.

Meanwhile, the dispersant additive may have affinity with both of the silica, which is surface-treated by fluoridation, and the organic solvent. Accordingly, dispersibility may be improved.

Meanwhile, the dispersing may include synthesizing an amphiphilic block copolymer by using an amphiphilic dispersant additive and the organic solvent. Accordingly, dispersibility may be improved.

### BRIEF DESCRIPTION OF THE DRAWINGS

FIG. 1 is a diagram illustrating a communication device using polyimide according to an embodiment of the present disclosure.
FIG. 2 is a diagram illustrating various examples of a communication channel of the communication device of FIG. 1.
FIG. 3 is a diagram illustrating an example of a printed circuit board (PCB) of a communication device 100 using polyimide according to an embodiment of the present disclosure.
FIG. 4 is a diagram illustrating a method of preparing polyimide according to an embodiment of the present disclosure.
FIGS. 5 to 12 are diagrams referred to in the description of the method of preparing polyimide of FIG. 4.

### DETAILED DESCRIPTION OF THE PREFERRED EMBODIMENTS

The present disclosure will be described in detail with reference to the accompanying drawings.

Terms "module" and "unit" for elements used in the following description are given simply in view of the ease of the description, and do not have a distinguishing meaning or role. Therefore, the terms "module" and "unit" may be used interchangeably.

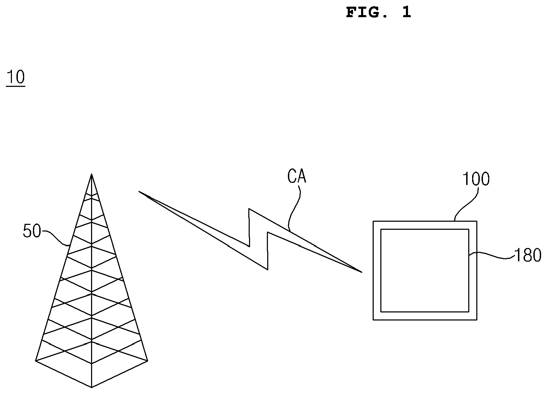

FIG. 1 is a diagram illustrating a communication device using polyimide according to an embodiment of the present disclosure.

Referring to the drawing, a communication device 100 may receive an RF signal CA from a wireless signal transmission device 50 that transmits the RF signal CA.

For example, the communication device 100 may perform broadcast communication, mobile communication, or the like.

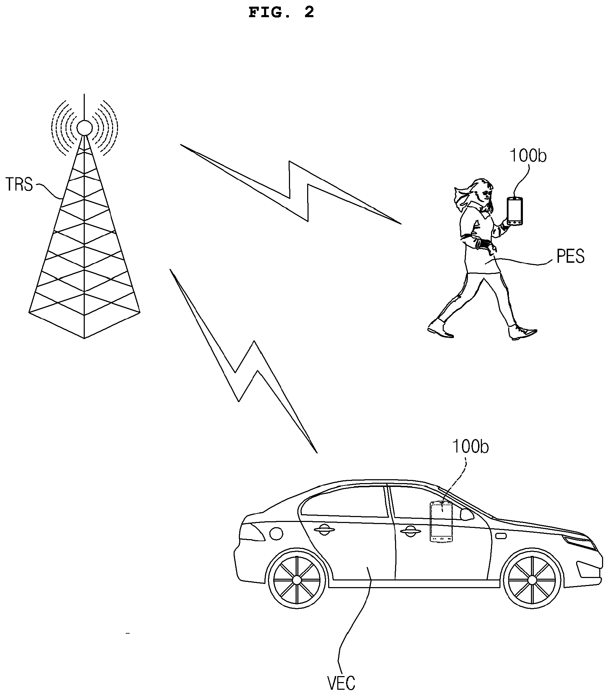

FIG. 2 is a diagram illustrating various examples of a communication channel of the communication device of FIG. 1.

Referring to the drawing, a communication device 100b of a pedestrian PES or a communication device 100b in a vehicle VEC may receive the RF signal CA output from a base station TRS.

Meanwhile, the communication device 100b of the pedestrian PES, which is a mobile terminal, may receive the RF signal over a static channel, and the communication device 100b in the vehicle VEC, which is an in-vehicle image display device, may receive the RF signal over a mobile channel.

As examples of the communication device 100 of FIG. 1, the communication device 100b of the pedestrian PES and the communication device 100b in the vehicle VEC may perform broadcast communication, mobile communication, or the like.

Meanwhile, with an increasing trend in data transmission and reception rate of the communication device 100, there is a drawback in that as the data transmission and reception rate increases, signal loss increases due to strong straightness of a communication signal.

Accordingly, it is preferable to use polyimide PI with low signal loss in the communication device 100.

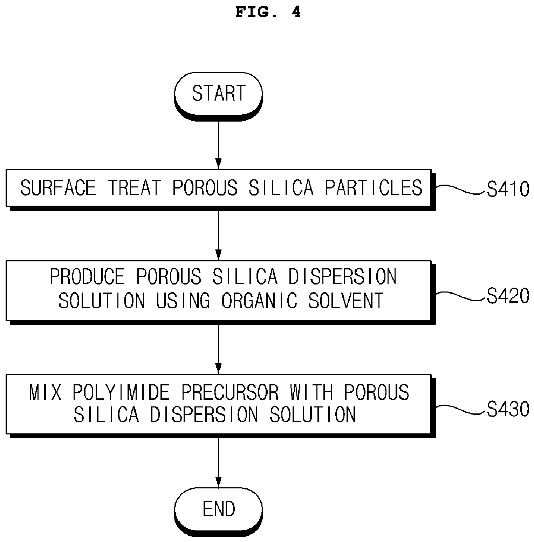

Meanwhile, polyimide PI has a problem in that dielectric loss increases due to high hygroscopicity, but in order to overcome the drawback, the present disclosure proposes polyimide and a method of preparing the same, in which by surface treating hollow silica, dispersibility may be improved and hygroscopicity may be reduced, which will be described later with reference to FIG. 4 and the following figures.

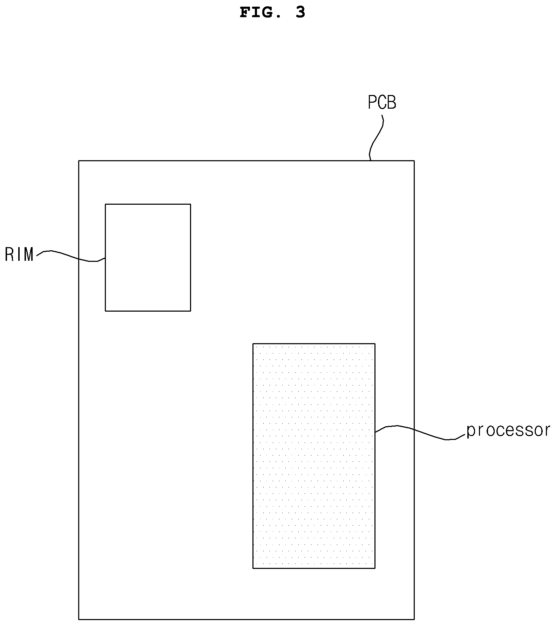

FIG. 3 is a diagram illustrating an example of a printed circuit board of a communication device using polyimide according to an embodiment of the present disclosure.

Referring to the drawing, the communication device 100 of FIG. 1 or the printed circuit board PCB of FIG. 2 may be an antenna circuit RIM or a board including a processor.

The antenna circuit RIM or the circuit board PCB may include polyimide according to the embodiment of the present disclosure.

Meanwhile, in the polyimide according to the embodiment of the present disclosure, hygroscopicity may be reduced and dispersibility may be improved, such that signal loss may be reduced even when the data transmission and reception rate of the antenna circuit RIM or the circuit board PCB increases during communication.

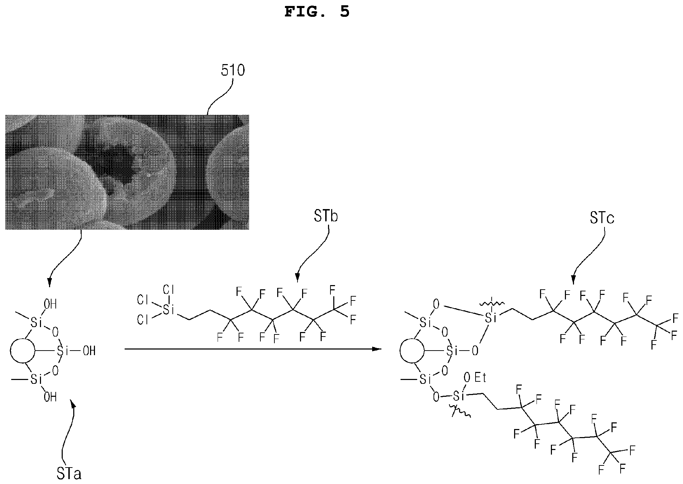

FIG. 4 is a diagram illustrating a method of preparing polyimide according to an embodiment of the present disclosure, and FIGS. 5 to 12 are diagrams referred to in the description of the preparation method of FIG. 4.

First, referring to FIG. 4, the method of preparing polyimide according to the embodiment of the present disclosure includes surface treating porous silica (or silica having pores) by fluoridation (S410).

Silica (silicon dioxide), which is hydrophilic, has a drawback in that when compounded with polyimide, its hygroscopicity increases.

Accordingly, in the embodiment of the present disclosure, the silica particles are surface-treated by fluoridation to reduce hygroscopicity.

Meanwhile, the surface treatment by fluoridation (S410) is preferably carried out by reforming the surface of the silica particles with a penetrant, so that the surface of the silica particles has hydrophobicity instead of hydrophilicity.

For example, the surface treatment by fluoridation (S410) may include dispersing the porous silica in a fluorine solvent or a nonpolar hydrocarbon solvent, and adding a silane containing fluorine, chlorine, or an alkoxy group.

Specifically, the surface treatment by fluoridation may be carried out by dispersing the porous silica in a fluorine solvent or a nonpolar hydrocarbon solvent, and then by adding Perfluorooctyl trichlro silane (FOTS).

Meanwhile, the Perfluorooctyl trichlro silane (FOTS) reacts only with the surface of silica, such that the fluorine solvent or the nonpolar hydrocarbon solvent may be required as a solvent to penetrate the pores of silica.

Meanwhile, examples of the nonpolar hydrocarbon solvent may include hexane, toluene, and the like.

Meanwhile, an example of surface treating the hollow silica by fluoridation may be as follows.

After putting 10 g of hollow silica having a pore size of 600 nm into a 500 cm³ round flask along with a 100 cm³ fluorine solvent (FC-3283) and dispersing the hollow silica therein, 2g of Perfluorooctyl trichlorosilane as one type of fluorinated trichlorosilane silane is put and stirred at room temperature for 24 hours.

After completing the reaction, the fluorine solvent (FC-3283) is removed using a rotary evaporator, and then is completely dried in a vacuum oven. The hollow silica, which is surface-treated by fluoridation, is observed not to be dispersed in water but to float in water.

FIG. 5 is a diagram illustrating an example of adding Perfluorooctyl trichloro silane (Stb) to silica (Sta) having pores 510, to produce silica (Stc) which is surface-treated by fluoridation.

Accordingly, the surface of silica particles has hydrophobicity instead of hydrophilicity, such that hygroscopicity may be reduced even in a high-humidity condition, thereby producing the effect of reducing a dielectric constant of the silica itself.

Meanwhile, for surface treatment of the silica by fluoridation, a silane containing chlorine or an alkoxy group may be used instead of the Perfluorooctyl trichloro silane.

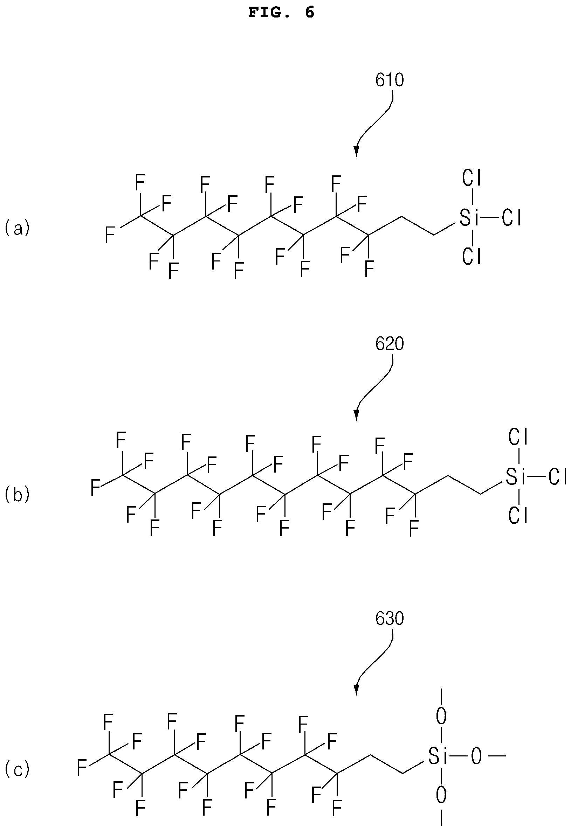

In (a) of FIG. 6, 1H,1H,2H,2H-Perfluorodecyl-trichloro silane is illustrated as an example of a silane containing chlorine or an alkoxy group.

In (b) of FIG. 6, 1H,1H,2H,2H-Perfluorododecyl trichloro silane is illustrated as another example of a silane containing chlorine or an alkoxy group.

In (c) of FIG. 6, 1H,1H,2H,2H-Perfluorodecyl trimethoxy silane is illustrated as yet another example of a silane containing chlorine or an alkoxy group.

Meanwhile, after reforming the surface, the silane is removed by evaporation. Accordingly, in order to perform reforming only on the surface of silica, the silane is preferably added in an amount of 10 wt% or more with respect to silica.

For example, if the amount of silane is less than 10 wt% with respect to silica, reforming of the surface of silica may not be performed effectively, such that in order to stably perform reforming on the surface of silica, the silane is preferably added in an amount of 10 wt% or more with respect to silica.

Meanwhile, after completing the preparation of polyimide, a polyimide film preferably has a thickness of approximately 25 um to be used on a board.

Regarding the thickness, if a diameter of the silica is exceeding 2.5 um, the diameter exceeds 10% of the thickness of the polyimide film, such that it is highly likely to reduce surface roughness during manufacture of the film.

Accordingly, a diameter of the silica is less than or equal to 10 % of the thickness of the polyimide film. For example, if the polyimide film has a thickness of 25 um, the silica preferably has a diameter of 2.5 um or less.

Meanwhile, if the diameter of silica is less than 0.1 um, it is difficult to be synthesized, and dispersibility is significantly reduced.

Accordingly, a diameter of the silica is in a range of 0.1 um to 2.5 um.

Meanwhile, porous silica particles with pores have a specific density of less than or equal to 2.5 g/cm³, and the volume of pores is preferably 10 % or more with respect to silica.

The silica has a density of approximately 2.65 g/cm³, and as the density of the porous silica particles decreases, the pores increases in size, thereby improving a dielectric constant.

However, if the porous silica particles have a density exceeding 2.5 g/cm³ and less than 2.65 g/cm³, there is a drawback in that the effect of improving the dielectric constant is small.

Accordingly, in order to improve the dielectric constant, the silica particles having pores have a density of less than or equal to 2.5 g/cm³, and the volume of pores is 10 % or more with respect to silica.

Meanwhile, in addition to strong hydrophobicity, the silica which is surface-treated by fluoridation also has lipophobicity which is the property of not mixing well with other organic materials, thereby reducing miscibility with an organic solvent used in a polyimide precursor.

Accordingly, in the embodiment of the present disclosure, a dispersant additive having affinity with both a highly fluorinated material and a general organic material.

Then, the method of preparing polyimide according to the embodiment of the present disclosure includes injecting a dispersant additive into the porous silica, which is surface-treated by fluoridation, and dispersing the additive in an organic solvent (S420).

Subsequently, the method of preparing polyimide according to the embodiment of the present disclosure includes mixing a dispersion solution containing the porous silica with an organic solution containing a polyimide precursor (S430). Thus, polyimide may be prepared.

Meanwhile, the dispersant additive preferably has affinity with both the silica, which is surface-treated by fluoridation, and the organic solvent.

Meanwhile, the dispersion (S420) may include synthesizing an amphiphilic block copolymer by using an amphiphilic dispersant additive and the organic solvent.

Meanwhile, an example of the synthesizing of the amphiphilic dispersant additive (block copolymer (PFDMA-b-PDMAAm)) may be as follows.

0.030 g (0.183 mmol) of 2,2'-azobis(2-methylpropionitrile) (AIBN) and 0.324 g (1.93 mmol) of 2-cyano-2-propyl dodecyl trithiocarbonate (CPDTC) is put in a 100 cm³ shrink tube, to be substituted with nitrogen.

After putting 10.0 g (38.6 mmol) of 1H,1H,2H,2H-perfluorodecyl methacrylate (FDMA), which is a fluorinated monomer, and 3 cm³ beznotrifluoride, which is a fluorinated reaction solvent, in a 30 cm³ vial, the atmosphere is substituted with nitrogen gas.

The FDMA solution and 7 cm³ beznotrifluoride are placed under nitrogen, and are subjected to a freeze-pump-thaw process three times to substitute oxygen, contained in the solution, with nitrogen. Then, the resultant solution is stirred at a temperature of 80^{É} for 15 hours.

Then, the solution in the tube is added dropwise to 200 cm³ methanol to form a precipitate, and then is filtered, recovered, and dried to obtain poly(perfluorododecyl methacrylate)(PFDMA).

After putting 3.00g of PFDMA and 0.010g (0.061 mmol) of AIBN in a 50 cm³ shrink tube, the atmosphere is substituted with nitrogen. After putting 0.892 g (7.88 mmol) of N,N-dimethyl acrylamide (DMAAm) and 2 cm³ of beznotrifluoride in a 30 cm³ vial, the atmosphere is substituted with nitrogen.

The DMAAm solution and 6 cm³ beznotrifluoride are put in the shrink tube under nitrogen, and are subjected to a freeze-pump-thaw process three times to substitute oxygen, contained in the solution, with nitrogen.

Thereafter, the resultant solution is stirred at 80 °C for 15 hours. Then, the solution in the tube is added dropwise to 200 cm³ hexane to form a precipitation, and then is filtered, recovered, and dried to obtain a poly(perfluorododecyl methacrylate)-*b*-poly(*N,N*-dimethyl acrylamide) block copolymer (PFDMA-*b*-PDMAAm).

4.09 g of the synthesized PFDMA-b-PDMAAm is prepared, and a GPC analysis result shows that molecular weight (Mn) is 10,000 g/mol and polydispersity index (PDI) is 1.16, and NMR analysis shows that a mole ratio between the FDMA and DMAAm in the block copolymer is 20:30.

Meanwhile, an example of a method of preparing 10 wt% of a hollow silica dispersion, which is surface-treated by fluoridation, may be as follows.

The PFDMA-b-PDMAAm (0.1 g) and 10 cm³ N-methyl-2-pyrrolidone (NMP) are placed in a 30 cm³ vial to be dispersed at 20,000 Hz and at 0 °C for three minutes using an ultrasonic homogenizer.

Then, 1.0 g of hollow silica dispersion, which is surface-treated by fluoridation, is placed to be dispersed at 20,000 Hz three times for five minutes each at 0 °C using an ultrasonic homogenizer.

The hollow silica dispersion, which is surface-treated by fluoridation, has a milk color, and has an average particle size of 850 nm based on a measurement result using a particle size analyzer and is observed to remain dispersed for an extended period of time.

Meanwhile, an example of mixing the hollow silica dispersion, which is surface-treated by fluoridation, with a polyamic acid solution may be as follows.

A dispersion in an amount of 20 % with respect to the polyamic acid is prepared using the hollow silica which is surface-treated by fluoridation.

A 10 cm³ polyamic acid solution (15 wt% in NMP) (supplied from Sigma Aldrich) and 10 wt% of 3 cm³ hollow silica dispersion, which is surface-treated by fluoridation, are placed in the 30 cm³ vial.

The solution is dispersed at 20,000 Hz three times for ten minutes each at 0 °C using an ultrasonic homogenizer. The polyamic acid solution, in which the hollow silica surface-treated by fluoridation is dispersed, has an opaque yellow color.

Meanwhile, an example of preparing a polyimide film containing the hollow silica, which is surface-treated by fluoridation, may be as follows.

Impurities, such as dust, are removed from the polyamic acid mixture solution by using a syringe filter, and defoaming is performed using a paste mixer to remove bubbles.

The mixture solution, from which the impurities and bubbles are removed, is spin coated on an Si substrate at 400 rpm for 60 seconds, and then is imidized at 100 °C for 30 minutes, at 200 °C for 30 minutes, and at 400 °C for 40 minutes. In this case, a heating rate is maintained at 5 °C. A film, separated from the Si substrate, is prepared with a thickness of about 20 um, and is observed to have an opaque brown color. A dielectric constant and a moisture absorption rate are measured for the prepared film.

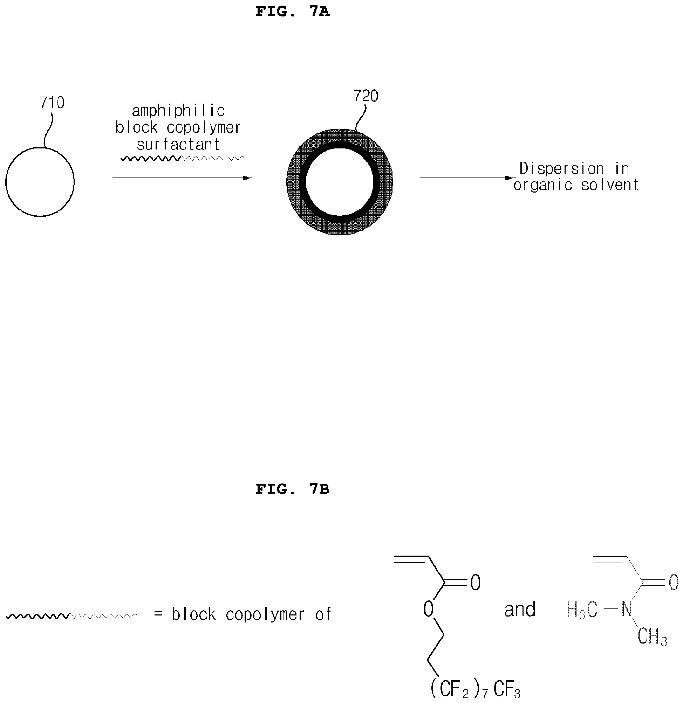

FIG. 7A is a diagram illustrating an example of adding an amphiphilic dispersant additive 720 to silica which is surface-treated by fluoridation, and then dispersing the silica 710 in an organic solvent.

FIG. 7B is a diagram illustrating an example of synthesizing amphiphilic block copolymer, in order to disperse the fluorinated silica particles in an N-methyl-2-pyrrolidone (NMP) solvent.

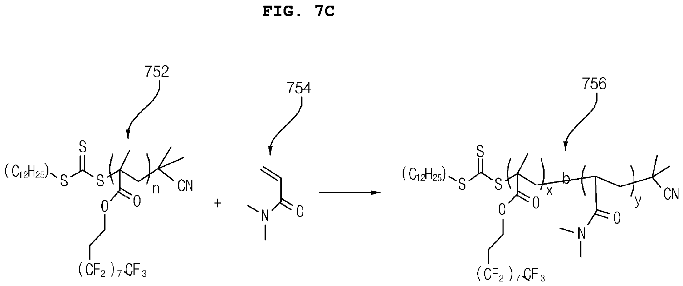

FIG. 7C is a diagram illustrating, as an example of amphiphilic dispersant additive, PFDMA-b-PDMAAm 756 in which Dimethylacrylamide (DMMAAm) 754 is added to 1H,1H,2H,2H-Perfluorodecyl methacrylate (PFDMA) 752.

Meanwhile, unlike the drawing, various examples of the amphiphilic dispersant additive may be used.

For example, the amphiphilic dispersant additive may be a block copolymer of FDMA monomer and N-vinyl pyrrolidinone (NVP).

In another example, the amphiphilic dispersant additive may be a block copolymer containing a monomer having strong hydrophilicity (e.g., vinyl acetate, methyl methacrylate, etc.).

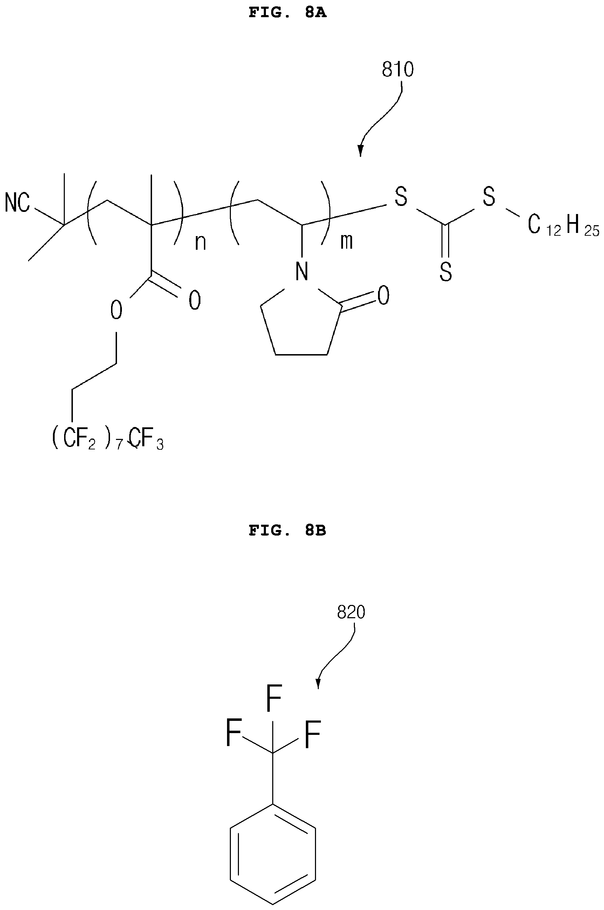

FIG. 8A is a diagram illustrating PFDMA-b-PNVP 810 as an example of the amphiphilic dispersant additive.

FIG. 8B is a diagram illustrating an example of a fluorine solvent.

Referring to the drawing, a fluorine solvent 820 may be Trifluorotoluene. Benzotrifluoride is a common name for Trifluorotoluene.

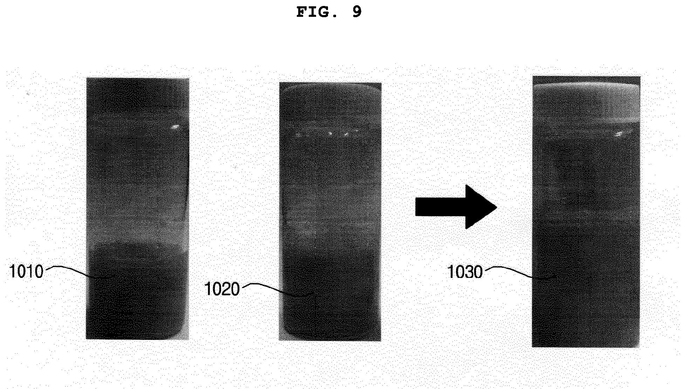

FIG. 9 is a diagram illustrating dispersibility of the silica, which is surface-treated by fluoridation, and an organic solvent.

Referring to the drawing, in an organic solvent 1010 containing 1 g of the silica which is surface-treated by fluoridation, precipitation occurs at the bottom of a container, in which the silica precipitates. In this case, the organic solvent may be 10 ml of NMP.

Meanwhile, in an organic solvent 1020 containing 2 g of the silica which is surface-treated by fluoridation, precipitation occurs at the bottom of a container, in which the silica precipitates. In this case, the organic solvent may be 10 ml of NMP.

That is, if a separate dispersion step is not performed after the surface treatment by fluoridation, the silica may not be dispersed uniformly, such that it may be difficult to form a uniform polyimide film.

Accordingly, in this embodiment of the present disclosure, an organic solvent 1030 containing 1 g of the silica, which is surface-treated by fluoridation, 0.1 g of the dispersant additive and 10 ml of the polyamic acid are added. In this manner, the silica does not precipitate at the bottom of a container, and the silica may be dispersed uniformly throughout the container.

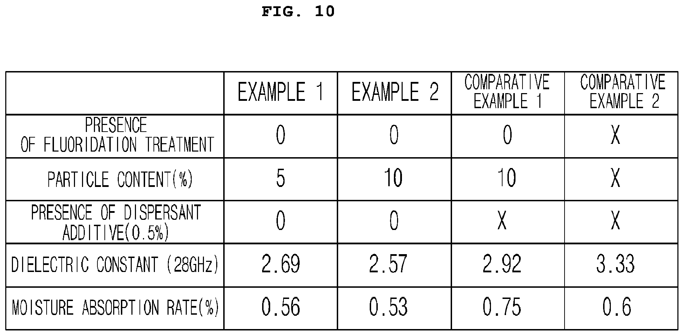

FIG. 10 is a diagram illustrating examples according to an embodiment of the present disclosure and comparative examples.

Referring to the drawing, example 1 shows polyimide to which 5 % of the porous silica which is surface-treated by fluoridation, and 0.5 % of the dispersant additive are added, example 2 shows polyimide to which 10 % of the porous silica which is surface-treated by fluoridation, and 0.5 % of the dispersant additive are added, comparative example 1 shows polyimide containing 10 % of the porous silica which is surface-treated by fluoridation, with no dispersant additive added thereto, and comparative example 2 shows polyimide containing no porous silica which is surface-treated by fluoridation, and no dispersant additive added thereto.

In example 1, example 2, and comparative example 1 in which the surface treatment by fluoridation is carried out, dielectric constant values are 2.69, 2.57, and 2.92, respectively, but comparative example 2, in which no surface treatment by fluoridation is carried out, shows a high dielectric constant of 3.33.

Meanwhile, in example 1 and example 2 in which the dispersant additive is added, moisture absorption rates are 0.56 and 0.53, respectively, which are less than 0.56, and comparative example 2 shows a moisture absorption rate of 0.6, but in comparative example 1, a moisture absorption rate is 0.75, showing a considerable increase in moisture absorption rate.

Accordingly, when the surface treatment by fluoridation is carried out and the dispersant additive is used according to an embodiment of the present disclosure, the moisture absorption rate is observed to be approximately 0.56 or less, and the dielectric constant is observed to be approximately 2.7 or less.

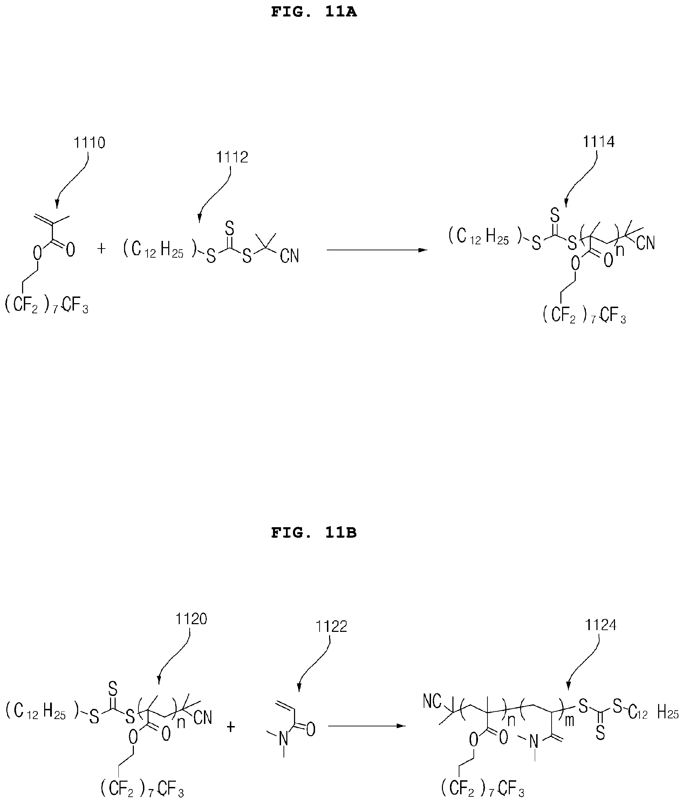

FIG. 11A is a diagram illustrating an example of preparing Perfluorodecyl methacrylate (PFDMA) 1114 by adding cyanopropyl dodecyl trithiocarbonate (CPDTC) 1112 to fluorodecyl methacrylate (FDMA) 1110.

FIG. 11B is a diagram illustrating an example of PFDMA-b-PDMAAm 1224 by adding Dimethylacrylamide (DMMAAm) 1122 to Perfluorodecyl methacrylate (PFDMA) 1120.

In this case, a composition ratio between the FDMA and DMMAAm may be approximately 20:30. By providing the composition ratio, dispersibility of silica, which is surface-reformed, may be ensured.

Meanwhile, if the silica is present in a range of less than 5 % with respect to the weight of polyimide, dielectric constant is high at 2.9 or more, and thus does not fall within a range of 2.7 or less.

Meanwhile, if the silica is present in a range exceeding 50 % with respect to the weight of polyimide, mechanical properties, such as tensile strength, flexibility, etc., are degraded, and thus it may be difficult to form a polyimide film.

Accordingly, the silica is preferably present in a range of 5 % to 50 % with respect to the weight of polyimide.

Meanwhile, a density of the prepared polyimide, having a fluorinated alkyl chain attached to the surface of the porous silica, is preferably lower than a density of the silica.

As described above, in order to improve the dielectric constant, the present disclosure sets the density of porous silica particles to be less than or equal to 2.5 g/cm³, and a pore volume to be greater than or equal to 10 % with respect to the silica, such that the density of the prepared polyimide is preferably less than or equal to 2.5 g/cm³.

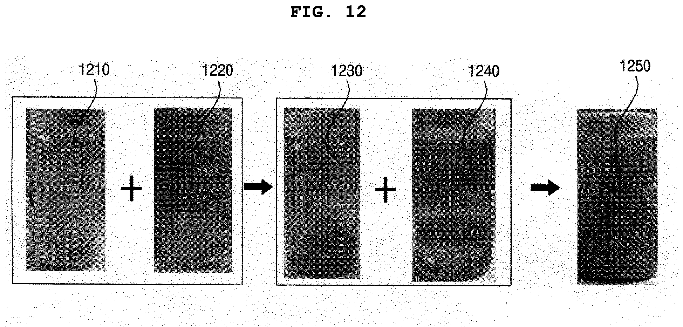

FIG. 12 is a diagram illustrating a process of dispersing porous silica 1210 which is surface-treated by fluoridation.

Referring to the drawing, by adding a dispersant additive 1220 to the porous silica 1210, which is surface-treated by fluoridation, and performing ultrasonication, a dispersion solution 1230 is obtained which contains the dispersant additive added thereto and the porous silica surface-treated by fluoridation.

By adding an organic solution 1240 containing a polyimide precursor to the dispersion solution 1230 containing the dispersant additive added thereto and the porous silica surface-treated by fluoridation, and by performing ultrasonication, polyimide may be prepared in which hygroscopicity is reduced even under moisture absorption conditions, and dispersibility is improved.

In this case, the organic solution 1240 containing the polyimide precursor may be PA varnish.

As for the polyimide and the method of preparing the same according to an embodiment of the present disclosure, the configurations and methods of the embodiments of the present disclosure described above are not limited in its application, but the entirety or a portion of the embodiments may be selectively combined to be configured into various modifications.

While the present disclosure has been particularly shown and described with reference to preferred embodiments thereof, it will be understood by those skilled in the art that the present disclosure is not limited to those exemplary embodiments and various changes in form and details may be made therein without departing from the scope and spirit of the invention as defined by the appended claims and should not be individually understood from the technical spirit or prospect of the present disclosure.

### Industrial Applicability

The present disclosure may be applied to polyimide and a method of preparing the same.

## Claims

1. Polyimide comprising:
porous silica; and
a fluorinated alkyl chain attached to a surface of the porous silica,
wherein the polyimide is prepared by mixing a dispersion solution containing the porous silica with an organic solution containing a polyimide precursor.

2. The polyimide of claim 1, wherein the polyimide is prepared by:
surface treating the porous silica by fluoridation;
injecting a dispersant additive into the porous silica, which is surface-treated by fluoridation, and dispersing the porous silica in an organic solvent; and
mixing the dispersion solution containing the porous silica with the organic solution containing the polyimide precursor.

3. The polyimide of claim 2, wherein the surface treatment by fluoridation comprises:
dispersing the porous silica in a fluorine solvent or a nonpolar hydrocarbon solvent; and
adding a silane containing fluorine, chlorine, or an alkoxy group.

4. The polyimide of claim 3, wherein the silane is added in an amount of 10 wt% or more with respect to the silica.

5. The polyimide of claim 1, wherein a diameter of the silica is in a range of 0.1 um to 2.5 um.

6. The polyimide of claim 1, wherein a range of silica with respect to a weight of the polyimide is 5 % to 50 %.

7. The polyimide of claim 1, wherein a density of the polyimide is 2.5 g/cm3 or less.

8. A method of preparing polyimide, the method comprising:
surface treating porous silica by fluoridation;
injecting a dispersant additive into the porous silica, which is surface-treated by fluoridation, and dispersing the porous silica in an organic solvent; and
mixing a dispersion solution containing the porous silica with the organic solution containing a polyimide precursor.

9. The method of claim 8, wherein the surface treatment by fluoridation comprises reforming a surface of silica particles by using a penetrant.

10. The method of claim 8, wherein the surface treatment by fluoridation comprises:
dispersing the porous silica in a fluorine solvent or a nonpolar hydrocarbon solvent; and
adding a silane containing fluorine, chlorine, or an alkoxy group.

11. The method of claim 10, wherein the silane comprises trichloro silane, trimethoxy silane, or alkoxy silane.

12. The method of claim 10, wherein the silane is added in an amount of 10 wt% or more with respect to the silica.

13. The method of claim 8, wherein the dispersant additive has affinity with both of the silica, which is surface-treated by fluoridation, and the organic solvent.

14. The method of claim 8, wherein a diameter of the silica is in a range of 0.1 um to 2.5 um.

15. The method of claim 8, wherein a range of silica with respect to a weight of the polyimide is 5 % to 50 %.

16. The method of claim 8, wherein a density of the polyimide is 2.5 g/cm3 or less.

17. The method of claim 8, wherein a ratio range of the silica and the dispersant additive is 5 wt% to 12 wt%.

18. The method of claim 8, wherein the dispersing comprises synthesizing an amphiphilic block copolymer by using an amphiphilic dispersant additive and the organic solvent.
